Europäisches Patentamt

European Patent Office

Office européen des brevets

(19)

(11) Numéro de publication: **0 079 828**
**B1**

(12) **FASCICULE DE BREVET EUROPEEN**

(45) Date de publication du fascicule du brevet: **29.01.86**

(51) Int. Cl.⁴: **G 21 C 7/08, G 21 C 7/10**

(21) Numéro de dépôt: **82402060.6**

(22) Date de dépôt: **10.11.82**

(54) **Dispositif de guidage d'une grappe de contrôle de réacteur nucléaire.**

(30) Priorité: **13.11.81 FR 8121270**

(43) Date de publication de la demande:
**25.05.83 Bulletin 83/21**

(45) Mention de la délivrance du brevet:
**29.01.86 Bulletin 86/05**

(84) Etats contractants désignés:
**AT BE CH DE FR GB IT LI SE**

(56) Documents cités:
**DE-A-2 331 355**
**FR-A-1 560 777**
**FR-A-2 254 859**
**FR-A-2 397 043**
**FR-A-2 399 715**

(73) Titulaire: **FRAMATOME ET CIE.**
**Tour Fiat 1, Place de la Coupole**
**F-92400 Courbevoie (FR)**

(72) Inventeur: **Dubreux, Eric**
**51 rue Anatole France**
**F-59620 Aulnoye-Aymeries (FR)**
Inventeur: **Assedo, Raphael**
**58 E rue Jules Ferry**
**F-78400 Chatou (FR)**

(74) Mandataire: **Fort, Jacques**
**CABINET PLASSERAUD 84, rue d'Amsterdam**
**F-75009 Paris (FR)**

Courier Press, Leamington Spa, England.

EP 0 079 828 B1

## Description

La présente invention se rapporte à un dispositif de guidage d'une grappe de contrôle constituée de plusieurs crayons absorbants susceptibles d'être introduits entre les crayons combustibles du coeur dans un réacteur nucléaire, notamment un réacteur à eau sous pression.

Chaque grappe de contrôle est constituée de crayons absorbants suspendus à un support multi-branches qui est appelé "araignée". Ce support est fixé à l'extrémité inférieure d'une tige manoeuvrée verticalement. Les crayons absorbants doivent pouvoir être extraits du coeur ou être introduits dans le coeur ce qui nécessite un guidage parfait sur toute la longueur de leur déplacement.

Un dispositif de guidage d'une grappe de contrôle, connu en soil du FR—A—2 397 04, comporte un boîtier tubulaire s'étendant entre une plaque supérieure de coeur qui limite le coeur vers le dessus et une plaque support. Des plaques horizontales qui permettant l'évacuation vers le haut du liquide primaire de refroidissement sont placées à l'intérieur du boîtier de guidage pour assurer un guidage discontinu des crayons. Au niveau inférieur, le boîtier contient un jeu de fourreaux de guidage pourvus de glissières qui assurent le guidage continu des crayons. Chaque fourreau de guidage présente une fente longitudinale permettant le passage des éléments radiaux de "l'araignée". Le boîtier est muni, sur une hauteur correspondant au guidage continu, d'ouvertures d'évacuation et de déviation du liquide primaire de refroidissement. Le boîtier de guidage reçoit le flux ascendant de liquide qui sort verticalement des assemblages combustibles, à l'extrémité supérieure du coeur, pour être ensuite détourné horizontalement vers les sorties latérales de la cuve. Il est donc situé dans une zone de grande turbulence.

Au niveau du guidage continu il existe un gradient de pression dans un plan horizontal. Du fait que chaque fourreau de guidage est ouvert, ce gradient de pression tend à appliquer le crayon absorbant contre les lèvres de la fente ce qui provoque une usure par frottement. Pour limiter ce phénomène, on prévoit des ouvertures d'équilibrage des pressions dans les faces des fourreaux de guidage mais ceci risque d'influer sur la tenue mécanique.

L'invention a pour but de réaliser un guidage continue de chaque crayon absorbant d'une grappe de contrôle de manière que les déséquilibres de pression autour du crayon-dûs à la poussée hydraulique-soient réduits au minimum. Ce guidage continu ne remet pas en cause la conception des fourreaux de guidage, des équipments internes ou de la cuve. L'invention permet de réduire les effets de la poussée hydraulique à l'intérieur du guidage continu en équilibrant les pressions autour du crayon absorbant. Cet équilibrage est réalisé en évitant de créer des courants radiaux parasites, en n'affaiblissant pas la tenue des fourreaux, en recherchant les zones de plus faible vitesse du liquide primaire pour éviter les perturbations de l'écoulement.

Le dispositif de guidage est constitué par un boîtier dans lequel sont montés des fourreaux de guidage continu munis chacun d'au moins une glissière cylindrique adaptée au guidage vertical d'un crayon et ouverts chacun par une fente verticale débouchant dans ladite glissière et formant des lèvres; il est caractérisé par le fait que lesdites lèvres présentent des orifices les entaillant en creux de manière que lorsqu'un crayon est en contact avec lesdites lèvres l'intérieur de la glissière communique avec ladite fente.

Selon une caractéristique les orifices de communication sont symétriques par rapport au plan vertical passant par le milieu de la fente et l'axe de la glissière.

Selon une autre caractéristique, les orifices sont réalisés par deux encoches enveloppant un cylindre dont l'axe est décalé de l'axe de la glissière du côté de la fente. Les orifices peuvent être réalisés par un lamage circulaire faisant le tour de la glissière.

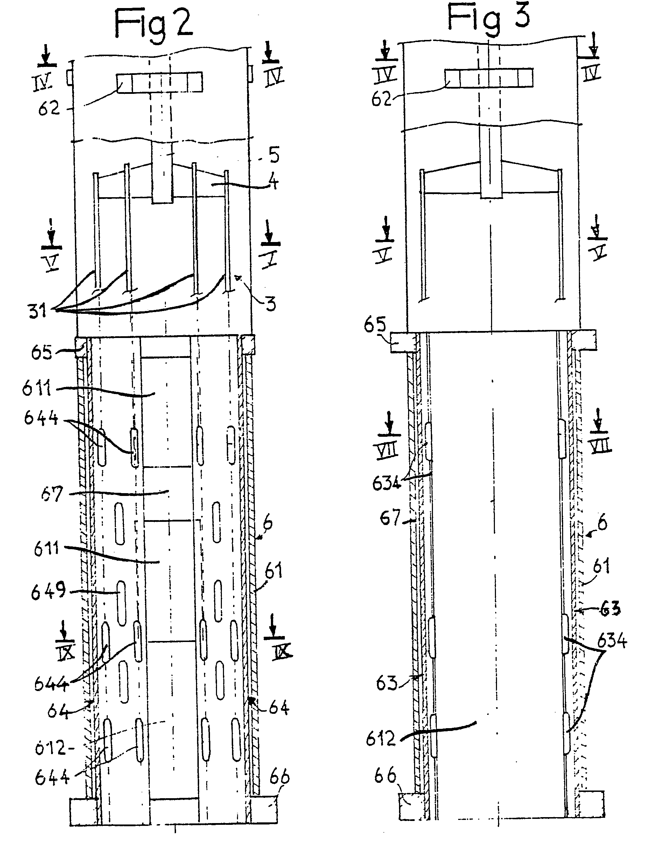

L'invention va maintenant être décrite, avec plus de détails, à l'aide de modes de réalisation particuliers donnés à titre d'exemples. Cette description, nullement limitative, fait référence aux figures 1 à 11 dans lesquelles:

La figure 1 représente une coupe verticale générale de la partie supérieure du réacteur.

La figure 2 représente une coupe verticale, passant par les fourreaux de guidage doubles, d'un dispositif de guidage.

La figure 3 représente une coupe verticale, passant par les fourreaux de guidage simples, du dispositif de guidage.

La figure 4 est une coupe transversale selon IV—IV des figures 2 et 3.

La figure 5 est une coupe transversale selon V—V des figures 2 et 3.

La figure 6 est une vue de détail d'un fourreau de guidage simple.

La figure 7 est une coupe selon VII—VII des figures 3 et 6.

La figure 8 est une vue de détail, en coupe verticale, d'un fourreau de guidage double.

La figure 9 est une coupe transversale selon IX—IX des figures 2 et 8.

Les figures 10 et 11 représentent, en coupe transversale, des variantes d'un fourreau double.

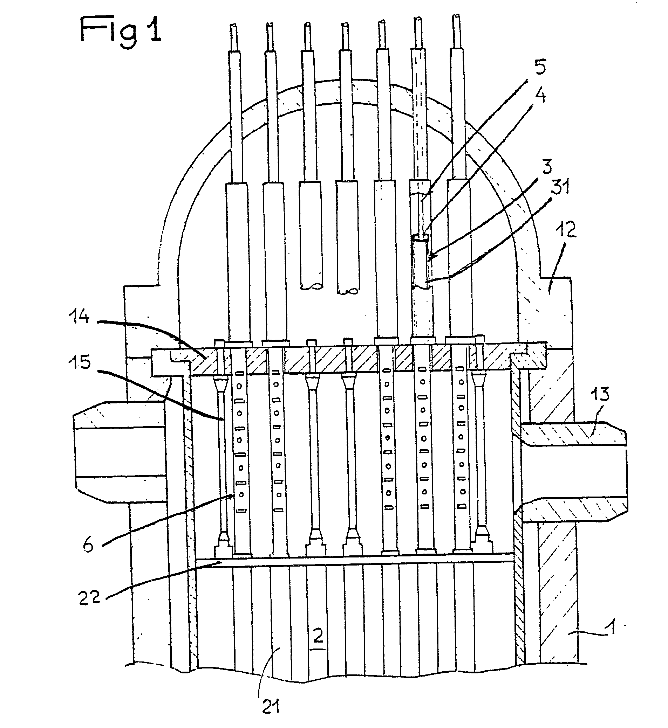

La figure 1 représente la partie supérieure d'un réacteur où l'on remarque le coeur 2 monté à l'intérieur de la curve 1. Cette cuve est coiffée par un couvercle 12 et elle est munie d'une tubulure latérale 13 permettant la sortie du liquide de refroidissement.

Le coeur 2 est délimité, à la partie supérieure, par une plaque de coeur 22 située au-dessous d'une plaque support 14. La plaque de coeur et la plaque support sont reliées par des colonnes 15. Le coeur est constitué d'assemblages combustibles 21 juxtaposés. Chaque assemblage est formé d'un nombre important de crayons verticaux de combustible.

Le réglage de la réactivité est assuré en introduisant, plus ou moins, des grappes de contrôle 3 dans certains des assemblages du coeur. Chaque grappe de contrôle est constituée de plusieurs crayons 31 en matériau absorbant. Ces crayons sont suspendus ensemble, par leurs extrémités supérieures, à une "araignée" 4 à bras radiaux, solidaire d'une tige de commande 5. Les crayons sont introduits par des passages de la plaque de coeur de manière à être positionnés entre les crayons combustibles de l'assemblage correspondant.

Les grappes de contrôle sont guidées par des dispositifs de guidage 6. Chaque dispositif comporte un boîtier 61, de forme parallélépipèdique, qui entoure l'ensemble des crayons de la gruppe associée. Il traverse la plaque de support 14 à laquelle il est suspendu par une bride boulonnée.

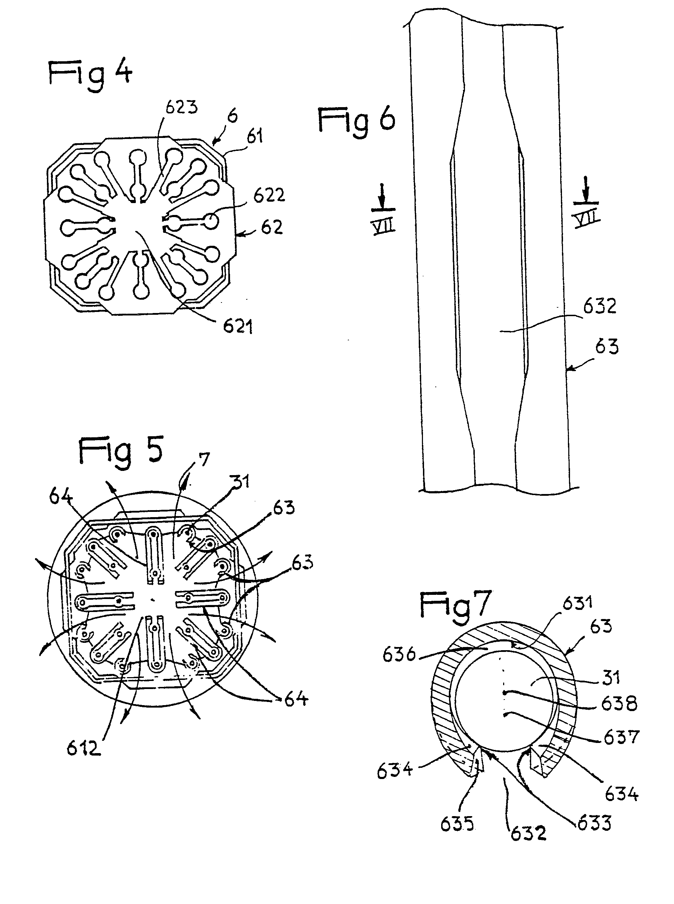

Les plaques de guidage intermédiaires 62 sont fixées dans le boitier 61 à différents niveaux et à intervalles réguliers. Chaque plaque intermédiaire, représentée sur la figure 4, assure un guidage discontinu des différents crayons de la grappe. Elle comporte une ouverture centrale 621 permettant le passage de "l'araignée". Autour de cette ouverture centrale sont disposés des trous circulaires 622 qui assurent le guidage des crayons absorbants et qui communiquent par des fentes radiales 623 avec ladite ouverture centrale.

Le guidage continu est assuré par des fourreaux de guidage 63 et 64 rangés verticalement. Les extrémités de ces fourreaux sont fixées à deux plaques terminales 65 et 66. L'araignée peut descendre au-delà de la plaque 66 qui constitué une bride de positionnement du dispositif de guidage sur la plaque de coeur 22. Le positionnement est assuré par des pions centreurs qui sont enfilés dans la plaque supérieure de coeur. Cette bride comporte des ouvertures ménagées en face de la plaque supérieure de coeur 22 pour laisser passer le liquide de refroidissement sortant du coeur. Le boîtier 61 est muni, sur une hauteur correspondant au guidage continu, d'ouvertures 611 permettant l'évacuation latérale du flux de liquide ascendant.

Chaque fourreau de guidage continu 63 ou 64 comporte au moins une glissière longitudinale 631 ou 641 qui a la forme d'un cylindre dont le diamètre est adapté au diamètre du crayon de manière à assurer le guidage de celui-ci. Chaque glissière d'un fourreau débouche, par une fente longitudinale et radiale 632 ou 642 vers le centre du boîtier.

Un fourreau de guidage simple 63 comporte une glissière unique 631 dans laquelle débouche la fente 632. Le fourreau de guidage double 64 comporte deux glissières 641 qui sont reliées l'une à l'autre par la fente 642 qui par ailleurs fait déboucher la glissière centrale 641 avec l'espace central 612.

La fente 632 ou 642 permet le passage d'un bras de "l'araignée". Chaque fente 632 ou 642 forme, avec le glissière, des lèvres 633 ou 643 écartées l'une de l'autre d'une distance inférieure au diamètre de ladite glissière.

Chaque glissière de guidage 631 ou 641 est associée à au moins une cavité 634 ou 644 s'inscrivant en creux dans chacune des lèvres 633 ou 643 de manière à créer, lorsque le crayon 31 est en contact avec ces lèvres, deux orifices 635 ou 645 faisant communiquer l'intérieur 636 ou 646 de la glissière avec la fente correspondante 632 ou 642. Les orifices 635 ou 645 crésés sur les deux lèvres de la fente sont symétriques par rapport au plan vertical de symétrie passant par le milieu de la fente.

Deux cavités 634 ou 644 d'un même fourreau sont séparées par une distance suffisante pour assurer un guidage continu. Ces cavités sont limitées à une interruption locale des lèvres d'appui du crayon de manière que le reste des lèvres, sur toute la hauteur, assure toujours le guidage en appui de ce crayon. Les cavités se situent, par rapport aux ouvertures 611 du boîtier, dans la zone de plus faible vitesse du liquide de refroidissement. Les cavités se situent entre des trous d'équilibrage 649 qui sont ménagés, sur les fourreaux doubles, pour equilibrer les pressions.

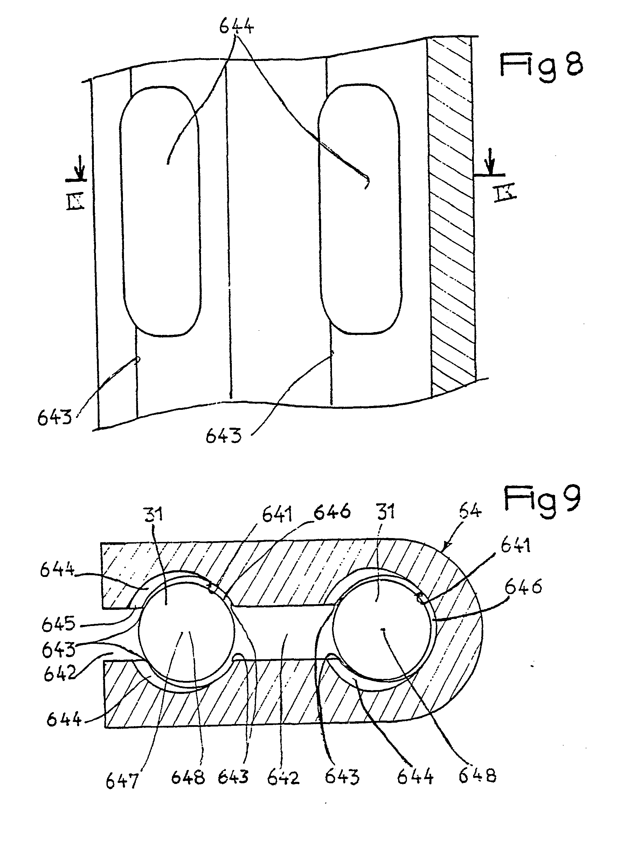

Dans les modes de réalisation des figures 6 et 7 et des figures 8 et 9, les cavités 634 ou 644 sont réalisées par deux entailles ou encoches enveloppant un cylindre d'axe 637 ou 647 décalé, vers l'axe 67 du boîtier, par rapport à l'axe 638 ou 648 de la glissière.

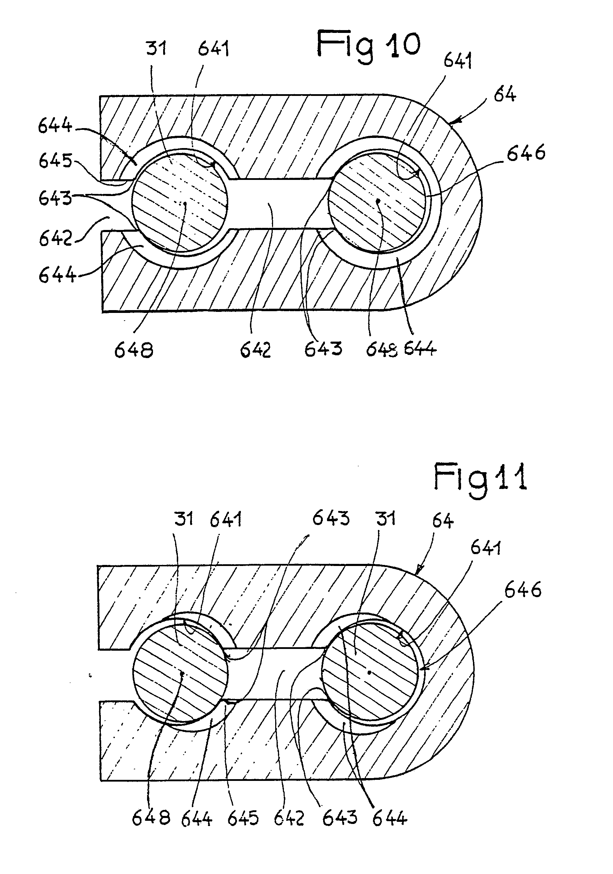

Dans le mode de réalisation de la figure 10 relatif à un fourreau double, les cavités sont réalisées par des lamages circulaires s'inscrivant en creux sur tout le pourtour des glissières.

Dans les modes de réalisation précédents, les orifices 635 ou 645 s'inscrivent en creux dans les lèvres situées vers l'axe du boîtier par rapport au crayon. Les orifices 645 peuvent s'inscrirent, comme sur la figure 11, en creux dans les lèvres situées vers la périphérie du boîtier par rapport au crayon.

Le fonctionnement du dispositif de guidage selon l'invention va maintenant être expliqué avec plus détails.

Le flux ascendant du liquide de refroidissement qui sort des éléments combustibles remplit le boîtier et les intervalles entre les crayons et les fourreaux de guidage. Les courants de circulation repérés par les flèches 7 établissent, dans un plan horizontal, quatre zones de grande vitesse en regard des ouvertures 611 du boîtier, et quatre zones de plus faible vitesse en correspondance avec les coins du boîtier. Les volumes internes ménagés dans les fourreaux de guidage sont pratiquement des volumes morts. Le débit de sortie par les ouvertures d'équilibrage 649 est insuffisant vis-à-vis du débit admis dans l'espace 636 ou 646 compris entre la glissière et le crayon. Il s'établit donc une surpression dans l'espace 636 ou 646, autour ou sur un côté du crayon. Celui-ci s'appuie alors sur les lèvres de la fente.

Si l'on considère maintenant le guidage de chaque crayon 31, on peut dire que la zone 632 ou 642 est une zone statique, elle-même entourée de zones de plus faible pression. Dans le cas d'un fourreau à guidage simple, la zone 636 ménagée à l'opposé de cette fente et à l'arrière du crayon est une zone en surpression. Dans le cas du fourreau à guidage double, la zone 642 comprise entre deux crayons est soit en surpression, soit en dépression par rapport à la zone 642 de la fente orientée vers le centre du boîtier, suivant la position axiale par rapport aux ouvertures 611 du boîtier. Ce déséquilibre de pression a donc tendance à appliquer le crayon sur les lèvres situées vers le centre du boîtier et, dans certains cas, sur les lèvres situées dans la direction opposée.

Les cavités (634, 644) ménagées dans les fourreaux équilibrent les pressions entre les zones 642 et 646 ou 632 et 636. Du fait de la différence de pression régnant entre ces zones, il s'établit un débit, de 646 vers 642 ou de 636 vers 632, qui ne sera jamais en opposition avec les débits radiaux rayonnants se dirigeant vers les ouvertures 11 du boîtier.

Le positionnement des cavités entre les ouvertures d'équilibrage 649 permet d'éviter l'affaiblissement de la section soumise aux efforts de flexion maximum par les courants radiaux. De même, le positionnement des cavités au niveau de la base des ouvertures 611, du côté amont du courant de liquide, évite des phénomènes d'aspiration. Le nombre des cavités ou leur forme peuvent être modifiés, seule la symétrie d'un couple d'orifices sur les deux lèvres d'une même fente étant impérative avec une symétrie rayonnée pour l'ensemble des crayons.

Il est bien entendu que l'on peut, sans sortir du cadre de l'invention, imaginer des variantes et des perfectionnements de détail et, de même, envisager l'emploi de moyens équivalents. L'invention est applicable à tout guidage en continu d'un faisceau de crayons de grappe par tube fendu ou par fourreau ayant des sorties de liquide latérales ou radiales et une entrée axiale.

## Revendications

1. Dispositif de guidage d'une grappe de contrôle formée de crayons absorbants (31) reliés ensemble à une araignée (4) à bras radiaux, constitué par un boîtier (16) dans lequel sont montés des fourreaux (63, 64) de guidage continu munis chacun d'au moins une glissière cylindrique (631, 641) adaptée au guidage vertical d'un crayon (31), et ouverts chacun par une fente verticale (632, 642) débouchant dans ladite glissière et formant des lèvres (633, 643), caractérisé par le fait que lesdites lèvres (633, 643) présentent des orifices (635, 645) les entaillant en creux de manière que, lorsque le crayon (31) est en contact avec lesdites lèvres (633, 643), l'intérieur de la glissière (631, 641) communique avec ladite fente (632, 642).

2. Dispositif de guidage selon la revendication 1, caractérisé par le fait que lesdits orifices de communication (635, 645) sont symétriques par rapport au plan vertical passant par le milieu de la fente et l'axe de la glissière.

3. Dispositif de guidage selon l'une quelconque des revendications précédentes, caractérisé par le fait que les orifices (635, 645) sont réalisés par deux encoches (634, 644) enveloppant un cylindre dont l'axe (637, 647) est décalé de l'axe (638, 648) de la glissière, du côté de la fente.

4. Dispositif de guidage selon l'une quelconque des revendications précédentes, caractérisé par le fait que les orifices (635, 645) sont réalisés par un lamage circulaire (644) faisant le tour de la glissière.

5. Dispositif de guidage selon l'une quelconque des revendications précédentes, caractérisé par le fait que les orifices (635, 645) sont disposés entre des ouvertures (649) d'équilibrage des pressions.

## Patentansprüche

1. Führungseinrichtung für ein Bündel aus absorbierenden Steuerstäben (31), die in einer Spinne (4) mit Radialarmen zusammengefaßt sind, mit einem Gehäuse (61), in welchem Hülsen (63, 64) für eine Koninuierliche Führung montiert sind, die je zumindest eine zylindrische Gleitführung (631, 641) zur vertikalen Führung eines Stabes (31) aufweisen und je über einen vertikalen Schlitz (632, 642) offen stehen, der in die Gleitführung mündet und Ränder (633, 643) bildet, dadurch gekennzeichnet, daß die Ränder (633, 643) in diese hohl eingeformte Aussparungen (635, 645) aufweisen, derart, daß bei Anlage des Stabes (31) an den Rändern (633, 643) das Innere der Gleitführung (631, 641) mit dem Schlitz (632, 642) in Verbindung steht.

2. Führungseinrichtung nach Anspruch 1, dadurch gekennzeichnet, daß die zur Verbindung dienenden Aussparungen (635, 645) zur Vertikalebene durch die Schlitzmitte und durch die Achse der Gleitführung symmetrisch angeordnet sind.

3. Führungseinrichtung nach Anspruch 1 oder 2, dadurch gekennzeichnet, daß die Aussparungen (635, 645) durch zwei Einschnitte (634, 644) gebildet sind, welche einen Zylinder einhüllen, dessen Achse (637, 647) gegenüber der Achse (638, 648) der Gleitführung gegen den Schlitz hin versetzt ist.

4. Führungseinrichtung nach einem der vorhergehenden Ansprüche, dadurch gekennzeichnet, daß die Aussparungen (635, 645) durch ein kreisförmige Ansenkung (644) gebildet sind, welche die Gleitführung umgibt.

5. Führungseinrichtung nach einem der vorhergehenden Ansprüche, dadurch gekennzeichnet, daß die Aussparungen (635, 645) zwischen Druckausgleichsöffnungen (649) angeordnet sind.

## Claims

1. A device for guiding a control cluster having absorbing rods (31) connected together to a spider (4) with radial arms, comprising a casing (16) in which continuous-guiding sleeves (63, 64) are mounted, which are each provided with at least one cylindrical slide (631, 641) suitable for the vertical guiding of a rod (13), and which open with a vertical slot (632, 642) emerging in the said slide and forming lips (633, 643), characterised in that said lips (633, 643) are formed with orifices (635, 645) forming a hollow in them, so that when the rod (31) is in contact with said lips (633, 643), the interior of the slide (631, 641) communicates with said slot (632, 642).

2. Guiding device according to claim 1, characterised in that said communication orifices (635, 645) are symmetrical relative to the vertical plane passing through the middle of the slot and the axis of the slide.

3. Guiding device according to either one of the preceding claims, characterised in that the orifices (635, 645) are constituted by two notches (634, 644) whose surface belongs to a cylinder whose axis (637, 647) is offset relative to the axis (638, 648) of the slide toward the slot.

4. Guiding device according to any one of the preceding claims, characterised in that the orifices (635, 645) are formed by a circular spot-facing (644) around the whole periphery of the slide.

5. Guiding device according to any one of the preceding claims, characterised in that the orifices (635, 645) are arranged between pressure-equilibrating openings (649).

# Fig 1

# 0 079 828

## Fig 2

## Fig 3

Fig 4

Fig 6

Fig 5

Fig 7

**0 079 828**

Fig 8

644

643

643

Fig 9

31    641  646    31    64

644

645

643

642

644

647    648  643  642  643    644  648

641

646

4

Fig 10

Fig 11